# EUROPÄISCHE PATENTSCHRIFT

(11) **EP 3 147 499 B1**
(45) Veröffentlichungstag und Bekanntmachung des Hinweises auf die Patenterteilung: **08.04.2020**
(21) Anmeldenummer: 16187323.7
(22) Anmeldetag: 06.09.2016
(51) Int. Cl.: F03D 1/06

(54) **ROTORBLATT MIT EINEM SCHALLOPTIMIERTEN PROFIL SOWIE VERFAHREN ZUM HERSTELLEN EINES ROTORBLATTS**
ROTOR BLADE COMPRISING A SOUND OPTIMIZED PROFILE AND METHOD FOR MANUFACTURING A ROTOR BLADE
PALE DE ROTOR A PROFIL OPTIMISE CONTRE LE BRUIT ET PROCEDE DE FABRICATION D'UNE PALE DE ROTOR

(30) Priorität: 25.09.2015 DE 102015012427
(43) Veröffentlichungstag der Anmeldung: 29.03.2017
(73) Patentinhaber: Senvion Deutschland GmbH, 22297 Hamburg (DE)
(72) Erfinder: ERBSLÖH, Sascha, 24784 Westerrönfeld (DE)
(74) Vertreter: Wallinger Ricker Schlotter Tostmann

(56) Entgegenhaltungen:
- EP-A1- 2 682 602
- EP-A1- 2 816 227
- EP-A2- 1 674 723
- WO-A1-2014/170232
- US-A1- 2003 099 546
- US-A1- 2011 150 664
- US-A1- 2013 183 159
- US-A1- 2014 112 780

## Beschreibung

Die Erfindung betrifft ein Rotorblatt einer Windenergieanlage, wobei das Rotorblatt eine Saugseite, eine Druckseite, eine Rotorblattnase und eine Rotorblatthinterkante aufweist, welche sich zwischen einer Rotorblattwurzel und einer Rotorblattspitze erstrecken und ein Profil des Rotorblatts festlegen. Außerdem betrifft die Erfindung eine Windenergieanlage mit einem Rotorblatt und ein Verfahren zum Herstellen eines Rotorblatts einer Windenergieanlage, wobei das Rotorblatt eine Saugseite, eine Druckseite, eine Rotorblattnase und eine Rotorblatthinterkante aufweist, welche sich zwischen einer Rotorblattwurzel und einer Rotorblattspitze erstrecken und ein Profil des Rotorblatts festlegen.

Die Rotorblätter einer Windenergieanlage umfassen stets eine Saugseite und eine Druckseite, welche sich vielfach auf der Außenseite einer Saugseitenschale und einer Druckseitenschale erstrecken. Im Bereich einer Rotorblattnase sowie einer Rotorblatthinterkante sind die Saugseitenschale und die Druckseitenschale zusammengefügt, beispielsweise verklebt. Es entsteht ein Rotorblatt, welches sich ausgehend von einer Rotorblattwurzel, an der es mit der Nabe einer Windenergieanlage verbunden ist, bis zur Rotorblattspitze erstreckt. Die Formen der Saugseite, Druckseite sowie der Rotorblattnase und Rotorblatthinterkante definieren das Profil des Rotorblatts.

Der Ertrag einer Windenergieanlage ist wesentlich durch das Profil ihrer Rotorblätter bestimmt. Aus diesem Grund werden Rotorblätter im Hinblick auf eine optimale Leistungsausbeute hinsichtlich ihres Profils optimiert. Unvermeidbar treten jedoch im Betrieb einer Windenergieanlage Strömungsgeräusche an den Rotorblättern auf. Aus Lärmschutzgründen sind daher Mindestabstände, beispielsweise zu Wohngebieten oder anderen Schutzbereichen, einzuhalten. Dies schränkt die möglichen Standorte ein, an denen die betreffende Windenergieanlage eingesetzt werden kann.

Eine Maßnahme zum Reduzieren der Geräuschemission eines Rotorblatts besteht darin, dieses mit Hinterkantenzacken, sog. "Serrations", zu versehen. Serrations werden in einem äußeren Abschnitt des Rotorblatts an dessen Hinterkante vorgesehen. Ein entsprechendes Rotorblatt ist beispielsweise aus US 2011/0142666 A1 bekannt.

EP 2682602, EP 2816227 und US2014 / 112780 sind weitere Beispiele für Rotorblätter mit reduzierter Geräuschemission.

Es ist eine Aufgabe der Erfindung, ein Rotorblatt einer Windenergieanlage, eine Windenergieanlage sowie ein Verfahren zum Herstellen eines Rotorblatts einer Windenergieanlage anzugeben, wobei das Rotorblatt eine geringere Schallemission aufweisen soll.
Die Aufgabe wird gelöst durch ein Rotorblatt einer Windenergieanlage, wobei das Rotorblatt eine Saugseite, eine Druckseite, eine Rotorblattnase und eine Rotorblatthinterkante aufweist, welche sich zwischen einer Rotorblattwurzel und einer Rotorblattspitze erstrecken und ein Profil des Rotorblatts festlegen, wobei das Rotorblatt dadurch fortgebildet ist, dass es ein schalloptimiertes Profil aufweist, welches ausgehend von einem angenommenen leistungsoptimierten Profil, welches im Hinblick auf eine Leistungsausbeute des Rotorblatts aerodynamisch optimiert ist, zum Reduzieren der Schallemission des Rotorblatts in einem Rotorblattendbereich, der die Rotorblattspitze umfasst, durch zumindest eine der folgenden Maßnahmen verändert ist:
a) Vergrößerung eines Radius des Profils an der Rotorblattnase,
b) Verschiebung einer Position, an der eine maximale Profildicke vorliegt in Richtung der Rotorblattnase,
c) Verringerung einer maximalen Wölbung des Profils,
d) Verschiebung einer Position, an der eine maximale Wölbung des Profils des Rotorblatts vorliegt in Richtung der Rotorblatthinterkante.
Vorteilhaft reduzieren die genannten Maßnahmen zur Veränderung des aerodynamischen Profils des Rotorblatts im Rotorblattendbereich den Schallleistungspegel der Windenergieanlage. Für eine solche Windenergieanlage können geringere maximale Rotorschallleistungspegel garantiert werden, ohne dass der Schallleistungspegel durch Absenken der Blattspitzengeschwindigkeit reduziert werden muss. Letztere Maßnahme ist nämlich stets mit Leistungseinbußen verbunden und wird in sog. schallreduzierten Betriebsweisen ergriffen. Für eine Windenergieanlage, die mit Rotorblättern gemäß Aspekten der Erfindung versehen ist, können geringere maximale Rotorschallleistungspegel garantiert werden, so dass sie auch an Standorten eingesetzt werden kann, an denen herkömmliche Anlagen aufgrund ihrer zu hohen Schallemissionen nicht aufgestellt werden können oder zumindest zeitweise in schallreduzierten Betriebsarten betrieben werden müssen. Da vorteilhaft auf schallreduzierten Betriebsarten verzichtet wird, steigt außerdem der Ertrag der Windenergieanlage.

Das leistungsoptimierte Profil des Rotorblatts wird beispielsweise durch numerische Simulation oder durch praktische Versuche, beispielsweise im Windkanal, ermittelt. Ausgehend von diesem im Hinblick auf eine Leistungsausbeute des Rotorblatts aerodynamisch optimierten Profil werden gemäß Aspekten der Erfindung eine oder mehrere der zuvor genannten Maßnahmen ergriffen. Es hat sich als vorteilhaft herausgestellt, im äußeren Bereich des Rotorblatts, nämlich im Rotorblattendbereich, einen Übergang auf ein schalloptimiertes Blattspitzenprofil vorzunehmen, welches auch ohne Hinterkantenzacken niedrige Schallleistungspegel liefert. Das schalloptimierte Profil ist insbesondere auf turbulente Umströmung optimiert und ausgelegt. Dabei ist es ein Ziel, die Verdrängungsdicke an der Hinterkante zu minimieren. Dies wird durch die zuvor genannten Maßnahmen, ausgehend von dem leistungsoptimierten Profil, erreicht.

Der Rotorblattendbereich beginnt beispielsweise bei 80%, 85% oder 90% der relativen Blattlänge. Unter der relativen Blattlänge wird dabei der Quotient aus der relativen Position in Längsrichtung des Rotorblatts geteilt durch den Rotorradius verstanden. Beispielsweise erstreckt sich der Rotorblattendbereich, von der Rotorblattspitze aus betrachtet, in etwa 3 m bis 4 m in Richtung der Rotorblattwurzel. Mit anderen Worten weist also das Rotorblatt in seinen äußersten 3 m bis 4 m ein schalloptimiertes und kein leistungsoptimiertes Profil auf.

Gemäß einer vorteilhaften Ausführungsform ist vorgesehen, dass das Rotorblatt dadurch fortgebildet ist, dass es in einem mittleren Abschnitt Hinterkantenzacken (Serrations) an der Rotorblatthinterkante aufweist, wobei im Rotorblattendbereich keine Hinterkantenzacken vorhanden sind, und wobei sich der mittlere Abschnitt ausgehend von dem Rotorblattendbereich in Richtung der Rotorblattwurzel erstreckt.

Hinterkantenzacken, sog. Serrations, sind als Mittel zur Reduktion des Strömungslärms von Rotorblättern an sich bekannt. Indem diese nun, wie gemäß Aspekten der Erfindung vorgeschlagen, lediglich im mittleren Abschnitt des Rotorblatts eingesetzt werden, ist der Transport des Rotorblatts wesentlich einfacher. Sind nämlich auch am äußeren Ende des Rotorblattes Hinterkantenzacken vorhanden, so besteht beim Transport stets die Gefahr, dass die Hinterkantenzacken beschädigt werden. Indem auf Hinterkantenzacken im Rotorblattendbereich verzichtet wird, ist ein herkömmlicher Transport des Rotorblatts möglich, so wie er von Rotorblättern bekannt ist, die keine Hinterkantenzacken aufweisen. Die Rotorblattspitze kann gefahrlos in Taschen aufgenommen werden; die Gefahr die Hinterkantenzacken während des Transports des Rotorblatts zu beschädigen, ist wesentlich verringert. Außerdem kann auf konventionelle Vorrichtungen und Infrastruktur zum Transport des Rotorblatts zurückgegriffen werden.

Bevorzugt erstrecken sich die Hinterkantenzacken im gesamten mittleren Abschnitt. Gemäß einem weiteren Ausführungsbeispiel ist vorgesehen, dass sich die Hinterkantenzacken abschnittsweise im mittleren Abschnitt des Rotorblatts erstrecken. Ferner weisen die Hinterkantenzacken insbesondere ein Längen-zu-Breiten-Verhältnis von größer als zwei auf. Sie sind also zumindest doppelt so lang wie breit.

Gemäß einer weiteren Ausführungsform ist das Rotorblatt ferner dadurch fortgebildet, dass die Hinterkantenzacken
a) eine maximale Länge von weniger als 20% einer Länge der Profilsehne an der zugehörigen Längsposition des Rotorblatts aufweisen,
   und/oder
b) eine Materialstärke von 5 mm oder weniger aufweisen,
   und/oder
c) gegenüber einer Richtung der Profilsehne um einen Winkel von 5° oder weniger geneigt sind.

Die Hinterkantenzacken werden möglichst dünn ausgeführt. Sie sind insbesondere stufenfrei mit dem Profil des Rotorblatts verklebt. Der Winkel zwischen den Hinterkantenzacken und der Profilsehne wird jeweils in einer gemeinsamen Profilebene gemessen. Durch einen Anstellwinkel der Hinterkantenzacken (Winkel zwischen der Richtung der Profilsehne und der Ebene, in der sich die Hinterkantenzacken an dieser Längsposition des Rotorblatts erstrecken), der einen Wert von 5° oder weniger aufweist, wird der Arbeitspunkt des Profils nur unwesentlich verändert, der durch die Serrations erzeugte zusätzliche Auftrieb wird begrenzt.

Gemäß einer Ausführungsform ist ferner vorgesehen, dass im mittleren Abschnitt des Rotorblatts ein Verhältnis von Profildicke zu Sehnenlänge kleiner als 0,24 ist. Ferner ist das Rotorblatt gemäß einer weiteren Ausführungsform dadurch fortgebildet, dass sich der mittlere Abschnitt ausgehend von einer ersten Profilebene in Richtung der Rotorblattspitze erstreckt, wobei bei Nennleistung der Windenergieanlage das Rotorblatt in der ersten Profilebene mit einer Relativgeschwindigkeit von 55 m/s überströmt wird.

Die Rotorblattspitze trägt, da diese mit der größten Relativgeschwindigkeit überströmt wird, wesentlich zur Schallemission des Rotorblatts bei. Eine Veränderung des Profils des Rotorblatts im Rotorblattendbereich von einem leistungsoptimalen auf ein schalloptimales Profil ist besonders wirkungsvoll. Es hat sich herausgestellt, dass besonders gute Ergebnisse erzielt werden, wenn diese Änderungen ab einem Bereich vorgenommen werden, in dem das Rotorblatt mit Relativgeschwindigkeiten von 55 m/s und mehr überströmt wird.

Gemäß einer weiteren Ausführungsform ist ferner vorgesehen, dass das Rotorblatt in einem Blattwurzelbereich auf der Saugseite Wirbelgeneratoren aufweist, wobei sich der Blattwurzelbereich ausgehend von der Rotorblattwurzel bis zu einer zweiten Profilebene erstreckt, und wobei bei Nennleistung der Windenergieanlage das Rotorblatt in der zweiten Profilebene mit einer Relativgeschwindigkeit von 30 m/s überströmt wird.

Eine aerodynamisch sowie strukturell hocheffiziente Blattwurzel, welche mit Wirbelgeneratoren (auch als Vortex-Generatoren bezeichnet) versehen ist, erstreckt sich gemäß den genannten Ausführungsformen bis in eine Profilebene, in der das Rotorblatt mit einer Relativgeschwindigkeit von 30 m/s überströmt wird. Es hat sich herausgestellt, dass der Einsatz von Vortex-Generatoren in Bereichen des Rotorblatts, welche weiter in Richtung Rotorblattspitze liegen, im Hinblick auf die Schallemission des Rotorblatts keine nennenswerte weitere Verbesserung bringt.

Ferner ist das Rotorblatt dadurch fortgebildet, dass das Rotorblatt an der Rotorblattnase einen Erosionsschutz aufweist, wobei der Erosionsschutz mit einer Stufenhöhe von weniger als 0,2 mm in eine Oberfläche des Rotorblatts integriert ist.

Schließlich ist das Rotorblatt gemäß einer weiteren Ausführungsform dadurch fortgebildet, dass es auf der Saugseite einen tangentialen Ausblasschlitz aufweist, wobei sich der Ausblasschlitz ausgehend von einer dritten Profilebene in Richtung der Rotorblattspitze erstreckt und die dritte Profilebene an einer relativen Blattlänge von zumindest näherungsweise 80% angeordnet ist.

Sowohl die stufenfreie oder annähernd stufenfreie Integration eines Erosionsschutzes in die Oberfläche des Rotorblatts als auch die Integration eines Ausblasschlitzes, insbesondere an der genannten Position, führen zu einer weiteren Verringerung des Schallleistungspegels des Rotorblatts.

Die Aufgabe wird außerdem gelöst durch eine Windenergieanlage mit einem Rotorblatt gemäß einem oder mehreren der zuvor genannten erfindungsgemäßen Aspekte. Auf eine solche Windenergieanlage treffen die bereits zuvor im Hinblick auf das Rotorblatt erwähnten Vorteile in gleicher oder ähnlicher Weise zu, so dass auf Wiederholungen verzichtet wird.

Ferner wird die Aufgabe gelöst durch ein Verfahren zum Herstellen eines Rotorblatts einer Windenergieanlage, wobei das Rotorblatt eine Saugseite, eine Druckseite, eine Rotorblattnase und eine Rotorblatthinterkante aufweist, welche sich zwischen einer Rotorblattwurzel und einer Rotorblattspitze erstrecken und ein Profil des Rotorblatts festlegen, wobei das Verfahren durch die folgenden Schritte fortgebildet ist:
I) Bereitstellen eines leistungsoptimierten Profils des Rotorblatts, wobei das leistungsoptimierte Profil im Hinblick auf eine Leistungsausbeute des Rotorblatts aerodynamisch optimiert ist,
II) Verändern des leistungsoptimierten Profils, um in einem Rotorblattendbereich ein schalloptimiertes Profil zu erhalten, zum Reduzieren einer Schallemission des Rotorblatts, wobei ausgehend von dem leistungsoptimierten Profil im Rotorblattendbereich, der die Rotorblattspitze umfasst, zumindest eine der folgenden Maßnahmen durchgeführt wird:
   a) Vergrößern eines Radius des Profils an der Rotorblattnase,
   b) Verschieben einer Position, an der eine maximale Profildicke vorliegt in Richtung der Rotorblattnase,
   c) Verringern einer maximalen Wölbung des Profils,
   d) Verschieben einer Position, an der eine maximale Wölbung des Profils des Rotorblatts vorliegt in Richtung der Rotorblatthinterkante,
III) Herstellen des Rotorblatts mit dem schalloptimierten Profil im Rotorblattendbereich.

Auch auf das Verfahren zum Herstellen eines Rotorblatts treffen gleiche oder ähnliche Vorteile und Aspekte zu, wie sie bereits im Hinblick auf das Rotorblatt erwähnt wurden. Das Verfahren ist außerdem mit geringem Aufwand durchführbar, da ausgehend von einem leistungsoptimierten Profil, welches zum Herstellen des Rotorblatts vorhanden ist, lediglich geringe Profiländerungen vorgenommen werden müssen. Diese lassen sich mit geringem Aufwand in den vorhandenen Herstellungsprozess integrieren.

Das Verfahren ist ferner dadurch fortgebildet, dass das Rotorblatt in einem mittleren Abschnitt mit Hinterkantenzacken (Serrations) an der Rotorblatthinterkante versehen wird, wobei im Rotorblattendbereich keine Hinterkantenzacken vorgesehen werden, und wobei sich der mittlere Abschnitt ausgehend von dem Rotorblattendbereich in Richtung der Rotorblattwurzel erstreckt.

Gemäß einer weiteren Ausführungsform ist ferner vorgesehen, dass das Verfahren dadurch fortgebildet ist, dass die Hinterkantenzacken vorgesehen werden, die
a) eine maximale Länge von weniger als 20% einer Länge der Profilsehne an der zugehörigen Längsposition des Rotorblatts aufweisen,
   und/oder
b) eine Materialstärke von 5 mm oder weniger aufweisen,
   und/oder
c) gegenüber einer Richtung der Profilsehne um einen Winkel von 5° oder weniger geneigt sind.

Gemäß einer weiteren Ausführungsform ist vorgesehen, dass ein mittlerer Abschnitt vorgesehen wird, der sich ausgehend von einer ersten Profilebene in Richtung der Rotorblattspitze erstreckt, wobei bei Nennleistung der Windenergieanlage das Rotorblatt in der ersten Profilebene mit einer Relativgeschwindigkeit von 55 m/s überströmt wird. Insbesondere ist das Verfahren dadurch fortgebildet, dass das Rotorblatt in einem Blattwurzelbereich auf der Saugseite mit Wirbelgeneratoren versehen wird, wobei sich der Blattwurzelbereich ausgehend von der Rotorblattwurzel bis zu einer zweiten Profilebene erstreckt, und wobei bei Nennleistung der Windenergieanlage das Rotorblatt in der zweiten Profilebene mit einer Relativgeschwindigkeit von 30 m/s überströmt wird.

Ferner ist gemäß einer Ausführungsform vorgesehen, dass das Rotorblatt auf der Saugseite mit einem tangentialen Ausblasschlitz versehen wird, wobei sich der Ausblasschlitz ausgehend von einer dritten Profilebene in Richtung der Rotorblattspitze erstreckt und die dritte Profilebene an einer relativen Blattlänge von zumindest näherungsweise 80% angeordnet ist.

Gemäß weiterer Ausführungsformen ist vorgesehen, dass im mittleren Abschnitt des Rotorblatts ein Verhältnis von Profildicke zu Sehnenlänge von kleiner als 0,24 vorgesehen wird. Ferner ist insbesondere vorgesehen, dass das Rotorblatt an der Rotorblattnase mit einem Erosionsschutz versehen wird, wobei der Erosionsschutz mit einer Stufenhöhe von weniger als 0,2 mm in eine Oberfläche des Rotorblatts integriert wird.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird durch die beigefügten Ansprüche definiert.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine Windenergieanlage in schematisch vereinfachter Ansicht,
- Fig. 2: eine schematisch vereinfachte Draufsicht auf eine Saugseite eines Rotorblatts,
- Fig. 3: eine schematisch vereinfachte Querschnittsansicht entlang der Ebene III-III in Fig. 2,
- Fig. 4: eine schematisch vereinfachte Querschnittsansicht entlang der Ebene IV-IV in Fig. 2,
- Fig. 5: eine schematisch vereinfachte Querschnittsansicht im Bereich der Rotorblatthinterkante
- Fig. 6: eine schematisch vereinfachte Draufsicht auf einen Abschnitt von Hinterkantenzacken
- Fig. 7, 7a: schematisch vereinfachte Ansichten des Rotorblattprofils im Rotorblattendbereich,
- Fig. 8: ein relativer Radius eines schalloptimierten Rotorblatts an der Vorderkante, aufgetragen über einer relativen Blattlänge,
- Fig. 9: eine relative Dicke des Rotorblattprofils, aufgetragen über der relativen Länge des Rotorblatts,
- Fig. 10: eine maximale Distanz der Skelettlinie des Rotorblatts zur Sehne des Rotorblatts, aufgetragen über der relativen Länge,
- Fig. 11: eine maximale Wölbung des Rotorblattprofils, aufgetragen über der relativen Länge des Rotorblatts und
- Fig. 12: ein schematisch vereinfachtes Profil des Rotorblatts in der in Fig. 2 mit XII-XII bezeichneten Ebene.

In den Zeichnungen sind jeweils gleiche oder gleichartige Elemente und/oder Teile mit denselben Bezugsziffern versehen, so dass von einer erneuten Vorstellung jeweils abgesehen wird.

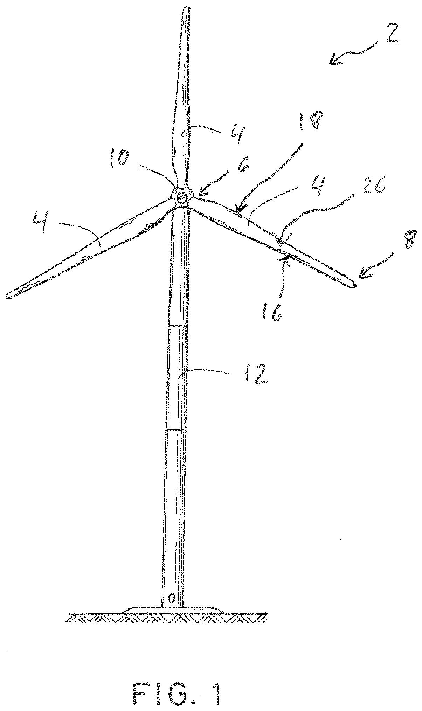

Fig. 1 zeigt in schematisch vereinfachter Ansicht eine Windenergieanlage 2, deren Rotorblätter 4 sich zwischen einer Rotorblattwurzel 6 und einer Rotorblattspitze 8 erstrecken. Die Rotorblätter 4 sind an ihren Rotorblattwurzeln 6 mit einer Nabe 10 verbunden, welche die Hauptwelle der Windenergieanlage 2 antreibt. Der Rotor der Windenergieanlage 2 einschließlich des Maschinenhauses, welches die weiteren Komponenten aufnimmt, sind auf einer Tragstruktur 12, beispielsweise einem Turm, befestigt.

Die Rotorblätter 4 umfassen jeweils eine Saugseite 14 (in Fig. 1 nicht sichtbar), eine Druckseite 26, eine Rotorblattnase 16 sowie eine Rotorblatthinterkante 18 (lediglich an einem der Rotorblätter mit Bezugszeichen dargestellt). Die Saug- und Druckseite 14, 26 sowie die Rotorblattnase 16 und Rotorblatthinterkante 18 erstrecken sich zwischen der Rotorblattwurzel 6 und der Rotorblattspitze 8. Sie legen ein aerodynamisch wirksames Profil des Rotorblatts 4 fest. Die Rotorblätter 4 der gezeigten Windenergieanlage 2 sind im Hinblick auf ihre Schallemission optimiert. Um ein solches schalloptimiertes Rotorblattprofil zu erhalten, wird zunächst ein leistungsoptimiertes Profil des Rotorblatts 4 bestimmt. Dies erfolgt beispielsweise durch nummerische Simulationen oder durch praktische Versuche. Das leistungsoptimierte Profil des Rotorblatts 4 ist im Hinblick auf eine Leistungsausbeute des Rotorblatts 4 aerodynamisch optimiert.

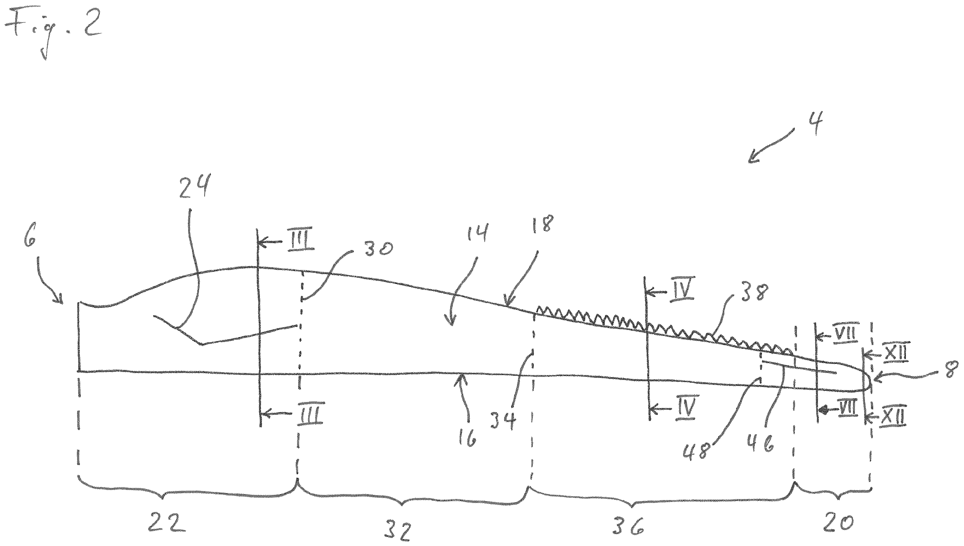

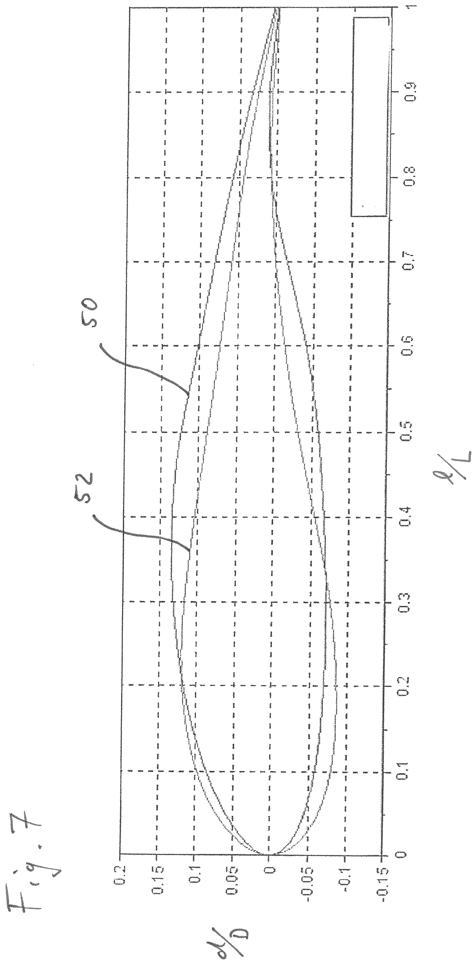

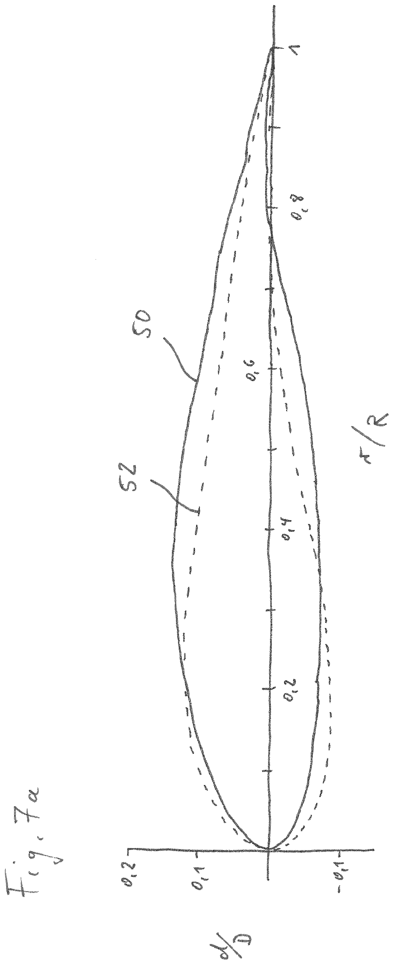

Fig. 2 zeigt ein schalloptimiertes Rotorblatt 4 in einer schematisch vereinfachten Draufsicht von seiner Saugseite 14. Zum Reduzieren der Schallemission wird in einem Rotorblattendbereich 20, der die Rotorblattspitze 8 umfasst, das leistungsoptimierte Profil in ein schalloptimiertes Profil verändert. Die im Detail getroffenen Maßnahmen werden im Zusammenhang mit den Fig. 7 bis 11 erläutert.

Zusätzlich zu dieser Veränderung des Rotorblattprofils im Rotorblattendbereich 20 werden weitere optionale Maßnahmen ergriffen, um den Schallleistungspegel des Rotorblatts 4 zu senken.

Beispielsweise wird das Rotorblatt 4 in einem Blattwurzelbereich 22 auf seiner Saugseite 14 mit Wirbelgeneratoren 24 versehen.

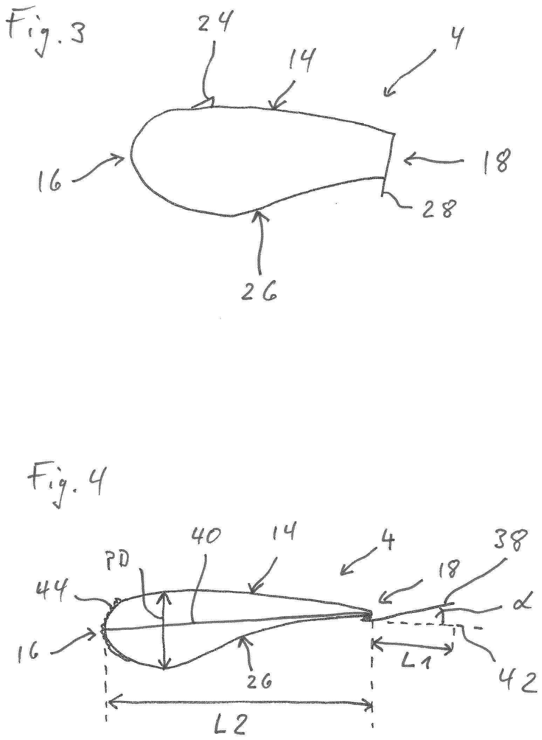

Fig. 3 zeigt in schematisch vereinfachter Ansicht einen Querschnitt durch das Rotorblatt 4 im Blattwurzelbereich 22, entlang der in Fig. 2 mit III-III bezeichneten Ebene. Auf der Saugseite 14 ist beispielhaft ein Wirbelgenerator 24 gezeigt. Optional ist auf der Druckseite 26 ein Hinterkantensteg 2 (auch als Tab bezeichnet) am Übergang zwischen der Druckseite 26 zur Rotorblatthinterkante 18 vorgesehen.

Wie Fig. 2 zeigt, erstreckt sich der Blattwurzelbereich 22 ausgehend von der Rotorblattwurzel 6 bis zu einer zweiten Profilebene 30 (in gestrichelter Linie dargestellt). Bei Nennleistungen der Windenergieanlage 2 wird das Rotorblatt 4 in der zweiten Profilebene 30 mit einer Relativgeschwindigkeit von 30 m/s überströmt.

In Richtung der Rotorblattspitze 8 schließt sich an den Blattwurzelbereich 22 ein Leistungsbereich 32 an. Dieser erstreckt sich ausgehend von der zweiten Profilebene 30 in Richtung der Rotorblattspitze 8 bis zu einer ersten Profilebene 34, auf die später Bezug genommen werden soll. Im Leistungsbereich 32 weist das Rotorblatt 4 ein leistungsoptimiertes Profil auf. Es werden außerdem in diesem Bereich keine Maßnahmen zur Schalloptimierung des Rotorblatts 4 vorgenommen.

An den Leistungsbereich 32 schließt sich in Richtung der Rotorblattspitze 8 ein mittlerer Abschnitt 36 an. Der mittlere Abschnitt 36 erstreckt sich ausgehend vom Rotorblattendbereich 20 in Richtung der Rotorblattwurzel 6 bis zu der ersten Profilebene 34. In der ersten Profilebene 34 wird das Rotorblatt 4 bei Nennleistung der Windenergieanlage 2 mit eine Relativgeschwindigkeit von 55 m/s überströmt.

Im mittleren Abschnitt 36 des Rotorblatts 4 ist dieses an der Rotorblatthinterkante 18 mit Hinterkantenzacken 38 versehen. Sowohl im Rotorblattendbereich 20, als auch in dem weiter in Richtung der Blattwurzel 6 gelegenen Leistungsbereich 32, weist das Rotorblatt 4 keine Hinterkantenzacken 38 auf. Die Hinterkantenzacken 38, auch als Serrations bezeichnet, verringern die Schallemission des Rotorblatts 4.

Fig. 4 zeigt in einem schematisch vereinfachten Querschnitt das Profil des Rotorblatts 4 in der in Fig. 2 mit IV-IV bezeichneten Ebene. Die Hinterkantenzacken 38 sind beispielsweise so ausgestaltet, dass sie eine maximale Länge L1 aufweisen, die weniger als 20% einer Länge L2 der Profilsehne 40 beträgt. Dabei wird die maximale Länge L1 der Hinterkantenzacken 38 und die Länge L2 der Profilsehne 40 an jeweils identischer Längsposition des Rotorblatts 4, also in identischem Abstand von der Rotorblattwurzel 6 bzw. der Rotorblattspitze 8 betrachtet. Die maximale Länge L1 der Hinterkantenzacken 38 wird ausgehend von der Rotorblatthinterkante 18 gemessen. Die Hinterkantenzacken 38 sind um einen Winkel α gegenüber einer Richtung 42 der Profilsehne 40 geneigt. Die maximale Länge der Hinterkantenzacken 38 wird bestimmt, wenn der Winkel α 0° beträgt, sich die Hinterkantenzacken 38 also in der Richtung 42 der Profilsehne 40 erstrecken.

Im mittleren Abschnitt 36 des Rotorblatts 4 ist das Profil außerdem beispielsweise so gewählt, dass ein Verhältnis der Profildicke PD zur Sehnenlänge L2 kleiner als 0,24 ist. Ferner ist das Rotorblatt 4 beispielsweise an der Rotorblattnase 16 mit einem Erosionsschutz 44 versehen. Der Erosionsschutz 44 ist beispielsweise mit einer Stufenhöhe von weniger als 0,2 mm in eine Oberfläche des Rotorblatts 4 integriert.

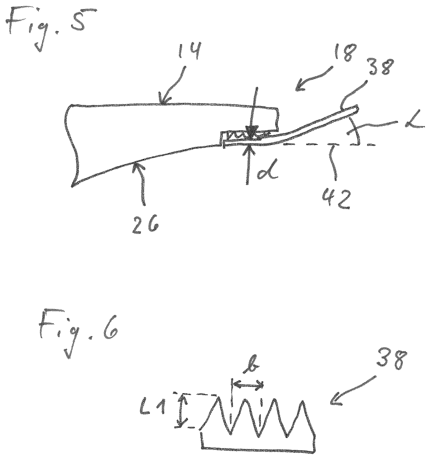

Fig. 5 zeigt eine Detailansicht des in Fig. 4 gezeigten Querschnitts im Bereich der Rotorblatthinterkante 18. Eine Materialstärke d der Hinterkantenzacken 38 beträgt beispielsweise weniger als 5 mm. Ferner sind die Hinterkantenzacken 38 beispielsweise stufenfrei mit dem Profil des Rotorblatts 4 verklebt.

Fig. 6 zeigt in schematisch vereinfachter Draufsicht einen Abschnitt der Hinterkantenzacken 38. Die Zacken sind beispielsweise so ausgestaltet, dass ihre maximale Länge L1 zumindest zweimal so groß ist, wie ihre Breite b.

Als weitere Maßnahme zur Verringerung der Schallemission ist das Rotorblatt 4 beispielsweise mit einem tangentialen Ausblasschlitz 46 (vgl. Fig. 2) versehen. Der Ausblasschlitz 46 erstreckt sich auf der Saugseite 14 des Rotorblatts 4 ausgehend von einer dritten Profilebene 48 in Richtung der Rotorblattspitze 8. Die dritte Profilebene 48 ist beispielsweise an einer relativen Blattlänge von zumindest näherungsweise 80% angeordnet. Der Ausblasschlitz 46 erstreckt sich ferner beispielsweise sowohl im mittleren Abschnitt 36 als auch im Rotorblattendbereich 20. Unter der relativen Blattlänge r/R wird der Quotient aus der radialen Position r (dem Abstand vom Zentrum des Rotors) und dem Rotorradius R verstanden.

Im Folgenden wird unter Bezugnahme auf die Fig. 7 bis 11 die Veränderung des Profils im Rotorblattendbereich 20 erläutert. Das dort vorliegende schalloptimierte Profil wird ausgehend von einem angenommenen leistungsoptimierten Profil beschrieben.

Fig. 7 zeigt in schematisch vereinfachter Darstellung einen Vergleich zwischen einem leistungsoptimierten Profil 50 und einem schalloptimierten Profil 52. Das gezeigte Rotorblattprofil liegt in einer Ebene, bezeichnet mit VII-VII in Fig. 2 vor. Aufgetragen ist die relative Höhe d/D über der relativen Profiltiefe I/L des Rotorblatts 4. Fig. 7a zeigt eine zu Fig. 7 zumindest näherungsweise identische Darstellung, welche lediglich der Erläuterung von Fig. 7 dient. Das leistungsoptimierte Profil 50 ist in durchgezogener Linie und das schalloptimierte Profil 52 in gestrichelter Linie dargestellt. Das schalloptimierte Profil 52 ist durch die folgenden Maßnahmen gegenüber dem leistungsoptimierten Profil verändert:
a) Der Radius des Profils an der Rotorblattnase 16 ist vergrößert.
b) Eine Position, an der eine maximale Profildicke vorliegt, ist in Richtung der Rotorblattnase 16 verschoben.
c) Eine maximale Wölbung des Profils ist verringert.
d) Eine Position, an der eine maximale Wölbung des Rotorblatts 4 vorliegt, ist in Richtung der Rotorblatthinterkante 18 verschoben.

Die zuvor genannten Maßnahmen können einzeln oder in Kombination ergriffen werden, um die Schallemission des Rotorblatts 4 zu senken.

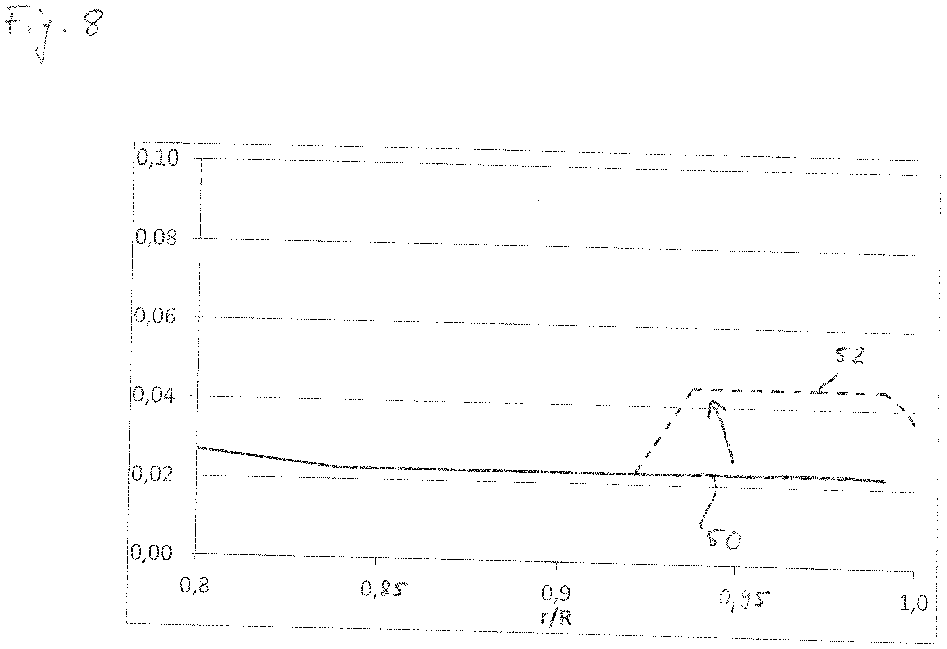

Die einzelnen Maßnahmen werden anhand der Darstellungen in den Fig. 8 bis 11 nochmals im Detail erläutert, welche verschiede Größen zeigen, die jeweils über relativen Blattlänge r/R aufgetragen sind. In durchgezogener Linie ist jeweils der Verlauf der betreffenden Größe bei einem leistungsoptimierten Profil 50 gezeigt. Im Vergleich dazu ist in gestrichelter Linie der abweichende Verlauf der betreffenden Größe gezeigt, wie sie bei einem schalloptimierten Profil 52 vorliegt.

Fig. 8 zeigt einen relativen Nasenradius des Rotorblatts 4. Wie mit einem Pfeil angedeutet, wird der relative Nasenradius bei dem schalloptimierten Profil 52 angehoben. Die Veränderungen werden ab einer relativen Blattlänge r/R von in etwa 0,9 vorgenommen.

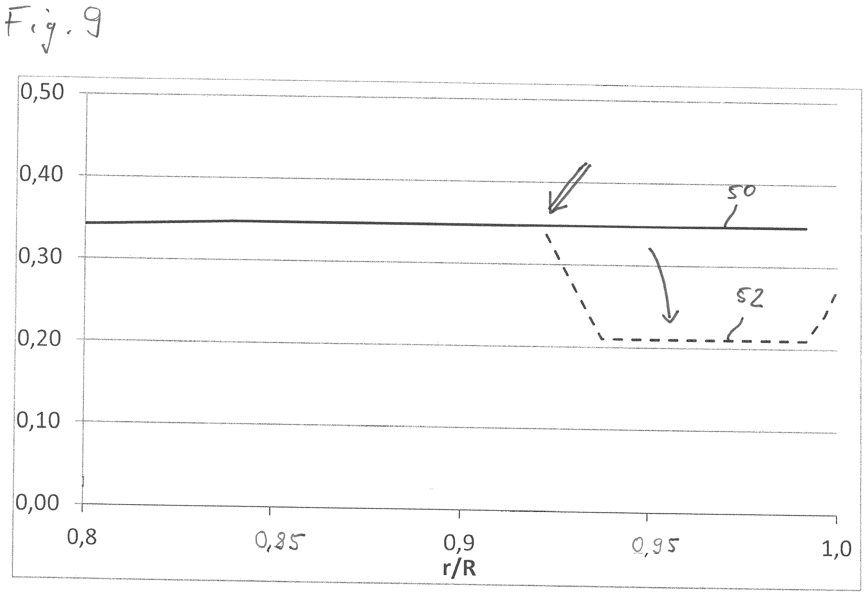

Fig. 9 zeigt eine relative maximale Dicke des Rotorblatts 4. Der Pfeil deutet an, dass die maximale Dicke des Rotorblatts 4 im Rotorblattendbereich 20 verringert wird. Eine Position der maximalen Profildicke wandert in Richtung der Rotorblattnase 16. Diese Position liegt beispielsweise an der mit Doppelpfeil gezeigten Kante, bei einer relativen Blattlänge von in etwa 0,9, ab der eine Veränderung bei dem schalloptimierten Rotorblattprofil 52 vorgenommen wird.

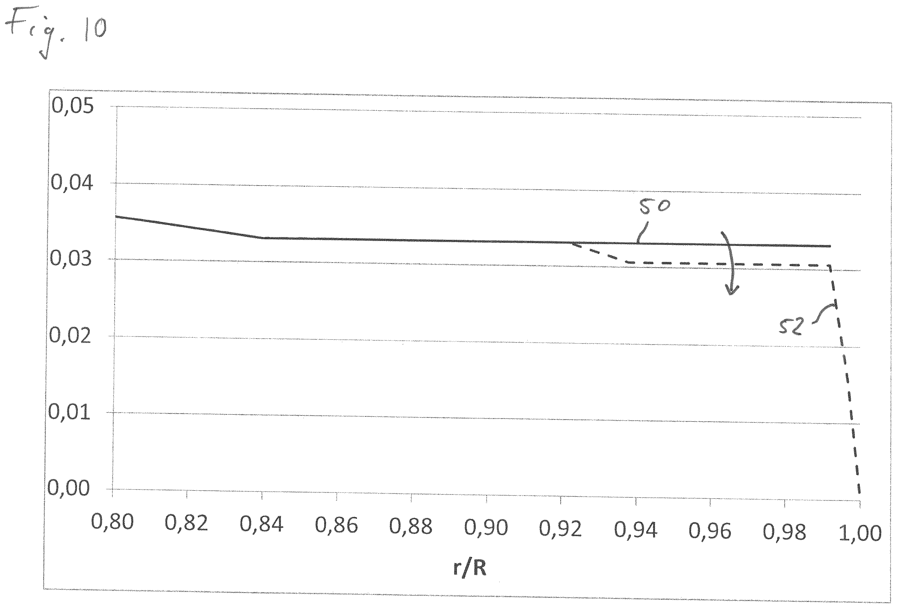

Fig. 10 zeigt eine maximale Wölbung des Rotorblatts 4. Im Rotorblattendbereich 20 wird die maximale Wölbung des Profils, wie mit einem Pfeil angedeutet, verringert. Diese Veränderung wird ab einer relativen Blattlänge r/R von in etwa 0,92 vorgenommen. Ferner ist vorgesehen, dass an der Rotorblattspitze 8, also einer relativen Länge von 1, die maximale Wölbung auf null sinkt.

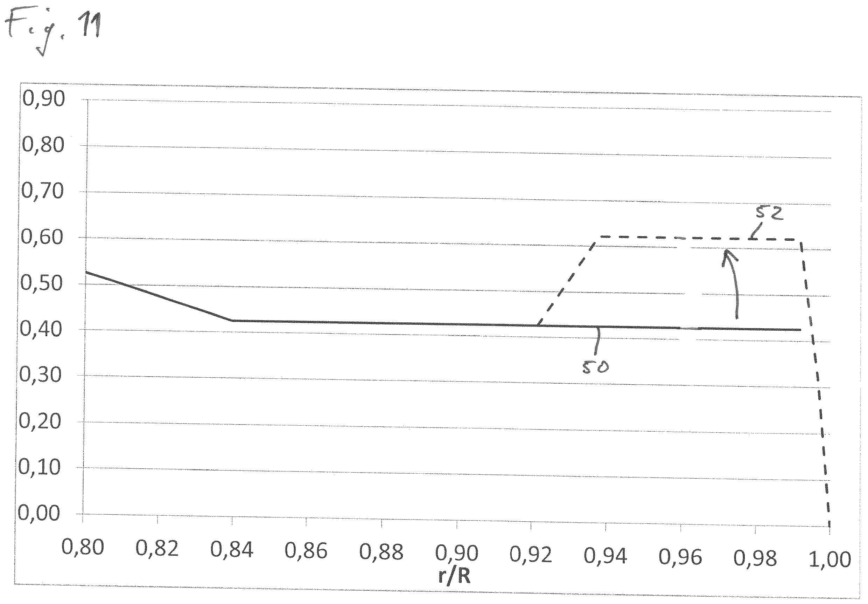

Fig. 11 zeigt eine maximale Wölbung des Rotorblatts 4. Wie mit einem Pfeil angedeutet, wird im Rotorblattendbereich 20 die maximale Wölbung angehoben, sie wandert in Richtung der Rotorblatthinterkante 18. An der Rotorblattspitze 8 fällt die maximale Wölbung beispielsweise auf null ab.

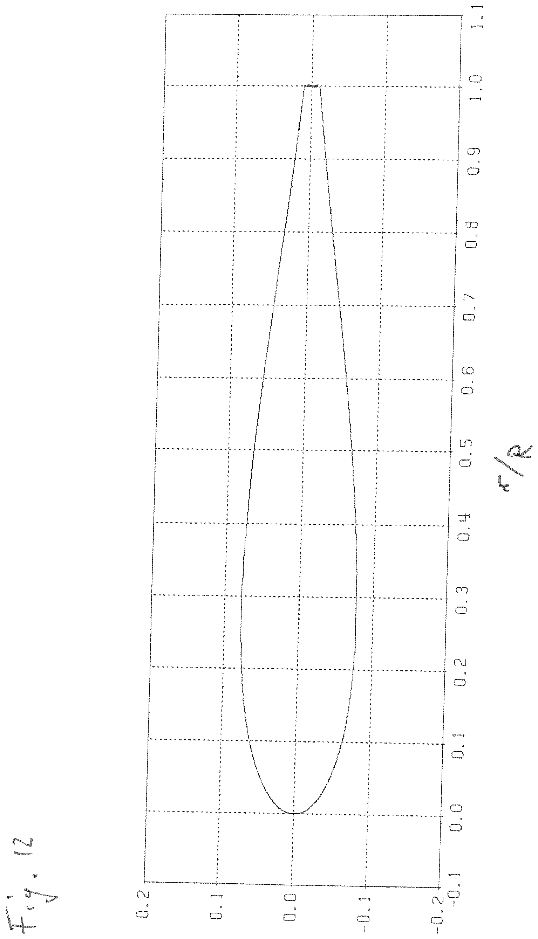

An der Rotorblattspitze 8, in einer Ebene die mit XII-XII in Fig. 2 bezeichnet ist, weist das Rotorblatt 4 in etwa das in Fig. 12 gezeigte Rotorblattprofil auf. An der Rotorblattspitze 8 liegt ein zumindest näherungsweise symmetrisches Profil vor, dessen maximale Dicke bei in etwa 0,28 der relativen Blattlänge r/R liegt.

Gemäß einem Verfahren zum Herstellen eines Rotorblatts 4 einer Windenergieanlage 2 wird zunächst ein leistungsoptimiertes Profil 50 des Rotorblatts 4 bereitgestellt. Dies erfolgt beispielsweise durch nummerische Simulation oder durch Versuche. Dieses leistungsoptimierte Profil 50 wird, um ein schalloptimiertes Profil 52 zu erhalten und die Schallemission des Rotorblatts 4 zu reduzieren, durch zumindest eine der folgenden Maßnahmen verändert:

Vergrößern eines Radius des Profils an der Rotorblattnase 16, Verschieben einer Position, an der eine maximale Profildicke vorliegt in Richtung der Rotorblattnase 16, Verringern einer maximalen Wölbung des Profils und/oder Verschieben einer Position, in der eine maximale Wölbung des Profils des Rotorblatts 4 vorliegt in Richtung der Rotorblatthinterkante 18. Anschließend wird das Rotorblatt 4 mit dem schalloptimierten Profil hergestellt.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 2: Windenergieanlage
- 4: Rotorblatt
- 6: Rotorblattwurzel
- 8: Rotorblattspitze
- 10: Nabe
- 12: Tragstruktur
- 14: Saugseite
- 16: Rotorblattnase
- 18: Rotorblatthinterkante
- 20: Rotorblattendbereich
- 22: Blattwurzelbereich
- 24: Wirbelgeneratoren
- 26: Druckseite
- 28: Hinterkantensteg
- 30: zweite Profilebene
- 32: Leistungsbereich
- 34: erste Profilebene
- 36: mittlerer Abschnitt
- 38: Hinterkantenzacken
- 40: Profilsehne
- 44: Erosionsschutz
- 46: Ausblasschlitz
- 48: dritte Profilebene
- 50: leistungsoptimiertes Profil
- 52: schalloptimiertes Profil

- L1: Länge der Hinterkantenzacken
- L2: Länge der Profilsehne
- α: Winkel
- d: Materialstärke
- b: Breite
- PD: Profildicke
- r: radiale Position
- R: Rotorradius

## Patentansprüche

1. Rotorblatt (4) einer Windenergieanlage (2), wobei das Rotorblatt (4) eine Saugseite (14), eine Druckseite (26), eine Rotorblattnase (16) und eine Rotorblatthinterkante (18) aufweist, welche sich zwischen einer Rotorblattwurzel (6) und einer Rotorblattspitze (8) erstrecken und ein Profil des Rotorblatts (4) festlegen, **dadurch gekennzeichnet, dass** das Rotorblatt (4) in einem Rotorblattendbereich (20) ein schalloptimiertes Profil (52) aufweist, welches ausgehend von einem angenommenen leistungsoptimierten Profil (50), welches im Hinblick auf eine Leistungsausbeute des Rotorblatts (4) aerodynamisch optimiert ist, zum Reduzieren der Schallemission des Rotorblatts (4) im Rotorblattendbereich (20), der die Rotorblattspitze (8) umfasst, durch die folgende Maßnahme verändert ist: Anheben einer maximalen Wölbung des Profils des Rotorblatts (4) im Rotorblattendbereich (20) ab einer relativen Blattlänge (r/R) von 0,92 und Verschiebung einer Position, an der die maximale Wölbung des Profils des Rotorblatts (4) vorliegt, in Richtung der Rotorblatthinterkante (18).

2. Rotorblatt (4) nach Anspruch 1, **dadurch gekennzeichnet, dass** das Rotorblatt (4) in einem mittleren Abschnitt (36) Hinterkantenzacken (38) (Serrations) an der Rotorblatthinterkante (18) aufweist, wobei im Rotorblattendbereich (20) keine Hinterkantenzacken (18) vorhanden sind, und wobei sich der mittlere Abschnitt (36) ausgehend von dem Rotorblattendbereich (20)in Richtung der Rotorblattwurzel (6) erstreckt.

3. Rotorblatt (4) nach Anspruch 2, **dadurch gekennzeichnet, dass** die Hinterkantenzacken (38)
a) eine maximale Länge L1 von weniger als 20% einer Länge L2 der Profilsehne (40) an der zugehörigen Längsposition des Rotorblatts (4) aufweisen,
und/oder
b) eine Materialstärke d von 5 mm oder weniger aufweisen,
und/oder
c) gegenüber einer Richtung (42) der Profilsehne (40) um einen Winkel α von 5° oder weniger geneigt sind.

4. Rotorblatt (4) nach Anspruch 2 oder 3, **dadurch gekennzeichnet, dass** im mittleren Abschnitt (36) des Rotorblatts (4) ein Verhältnis von Profildicke (PD) zu Sehnenlänge L2 kleiner als 0,24 ist.

5. Rotorblatt (4) nach einem der Ansprüche 2 bis 4, **dadurch gekennzeichnet, dass** sich der mittlere Abschnitt (36) ausgehend von einer ersten Profilebene (34) in Richtung der Rotorblattspitze (8) erstreckt, wobei bei Nennleistung der Windenergieanlage (2) das Rotorblatt (4) in der ersten Profilebene (34) mit einer Relativgeschwindigkeit von 55 m/s überströmt wird.

6. Rotorblatt (4) nach einem der Ansprüche 1 bis 5, **dadurch gekennzeichnet, dass** das Rotorblatt (4) in einem Blattwurzelbereich (22) auf der Saugseite (14) Wirbelgeneratoren (24) aufweist, wobei sich der Blattwurzelbereich (22) ausgehend von der Rotorblattwurzel bis zu einer zweiten Profilebene (30) erstreckt, und wobei bei Nennleistung der Windenergieanlage (2) das Rotorblatt (4) in der zweiten Profilebene (30) mit einer Relativgeschwindigkeit von 30 m/s überströmt wird.

7. Rotorblatt (4) nach einem der Ansprüche 1 bis 6, **dadurch gekennzeichnet, dass** das Rotorblatt (4) an der Rotorblattnase (16) einen Erosionsschutz (44) aufweist, wobei der Erosionsschutz (44) mit einer Stufenhöhe von weniger als 0,2 mm in eine Oberfläche des Rotorblatts (4) integriert ist.

8. Rotorblatt (4) nach einem der Ansprüche 1 bis 7, **dadurch gekennzeichnet, dass** das Rotorblatt (4)auf der Saugseite einen tangentialen Ausblasschlitz (46) aufweist, wobei sich der Ausblasschlitz (46) ausgehend von einer dritten Profilebene (48) in Richtung der Rotorblattspitze (8) erstreckt und die dritte Profilebene (48) an einer relativen Blattlänge von zumindest näherungsweise 80% angeordnet ist.

9. Windenergieanlage (2) mit einem Rotorblatt (4) gemäß einem der Ansprüche 1 bis 8.

10. Verfahren zum Herstellen eines Rotorblatts (4) einer Windenergieanlage (2), wobei das Rotorblatt (4) eine Saugseite (14), eine Druckseite (26), eine Rotorblattnase (16) und eine Rotorblatthinterkante (18) aufweist, welche sich zwischen einer Rotorblattwurzel (6) und einer Rotorblattspitze (8) erstrecken und ein Profil des Rotorblatts (4) festlegen, **gekennzeichnet durch** die folgenden Schritte:
I) Bereitstellen eines leistungsoptimierten Profils (50) des Rotorblatts (4), wobei das leistungsoptimierte Profil im Hinblick auf eine Leistungsausbeute des Rotorblatts aerodynamisch optimiert ist,
II) Verändern des leistungsoptimierten Profils (50), um in einem Rotorblattendbereich (20) ein schalloptimiertes Profil (52) zu erhalten, zum Reduzieren einer Schallemission des Rotorblatts (4), wobei ausgehend von dem leistungsoptimierten Profil im Rotorblattendbereich (20), der die Rotorblattspitze (8) umfasst, die folgende Maßnahme durchgeführt wird: Anheben einer maximalen Wölbung des Profils des Rotorblatts (4) im Rotorblattendbereich (20) ab einer relativen Blattlänge (r/R) von 0,92 und Verschieben einer Position, an der die maximale Wölbung des Profils vorliegt, in Richtung der Rotorblatthinterkante (18),
III) Herstellen des Rotorblatts (4) mit dem schalloptimierten Profil im Rotorblattendbereich (20).

11. Verfahren nach Anspruch 10, **dadurch gekennzeichnet, dass** das Rotorblatt (4) in einem mittleren Abschnitt (36) mit Hinterkantenza- cken (38) (Serrations) an der Rotorblatthinterkante (18) versehen
wird, wobei im Rotorblattendbereich (20) keine Hinterkantenzacken (18) vorgesehen werden, und wobei sich der mittlere Abschnitt (36)ausgehend von dem Rotorblattendbereich (20) in Richtung der Rotorblattwurzel (6) erstreckt.

12. Verfahren nach Anspruch 11, **dadurch gekennzeichnet, dass** die Hinterkantenzacken (38) vorgesehen werden, die
a) eine maximale Länge L1 von weniger als 20% einer Länge L2 der Profilsehne (40) an der zugehörigen Längsposition des Rotorblatts (4) aufweisen,
und/oder
b) eine Materialstärke d von 5 mm oder weniger aufweisen,
und/oder
c) gegenüber einer Richtung (42) der Profilsehne (40) um einen Winkel a von 5° oder weniger geneigt sind.

13. Verfahren nach Anspruch 11 oder 12, **dadurch gekennzeichnet, dass** ein mittlerer Abschnitt (36) vorgesehen wird, der sich ausgehend von einer ersten Profilebene (34) in Richtung der Rotorblattspitze (8) erstreckt, wobei bei Nennleistung der Windenergieanlage das Rotorblatt (4) in der ersten Profilebene (34) mit einer Relativgeschwindigkeit von 55 m/s überströmt wird.

14. Verfahren nach einem der Ansprüche 10 bis 13, **dadurch gekennzeichnet, dass** das Rotorblatt in einem Blattwurzelbereich (22) auf der Saugseite (14) mit Wirbelgeneratoren (24) versehen wird, wobei sich der Blattwurzelbereich (22) ausgehend von der Rotorblattwurzel (6) bis zu einer zweiten Profilebene (30) erstreckt, und wobei bei Nennleistung der Windenergieanlage (2) das Rotorblatt (4) in der zweiten Profilebene (30) mit einer Relativgeschwindigkeit von 30 m/s überströmt wird.

15. Verfahren nach einem der Ansprüche 10 bis 14, **dadurch gekennzeichnet, dass** das Rotorblatt (4) auf der Saugseite (14) mit einem tangentialen Ausblasschlitz (46) versehen wird, wobei sich der Ausblasschlitz (46) ausgehend von einer dritten Profilebene (48) in Richtung der Rotorblattspitze (8) erstreckt und die dritte Profilebene (48) an einer relativen Blattlänge von zumindest näherungsweise 80% angeordnet ist.

## Claims

1. A rotor blade (4) of a wind energy installation (2), wherein the rotor blade (4) has a suction side (14), a pressure side (26), a rotor blade nose (16) and a rotor blade trailing edge (18), which extend between a rotor blade root (6) and a rotor blade tip (8) and define a profile of the rotor blade (4), **characterised in that** the rotor blade (4) has a noise-optimised profile (52) in a rotor blade end region (20) which noise-optimised profile (52), starting from an assumed power-optimised profile (50) which is aerodynamically optimised with regard to a power yield of the rotor blade (4), is modified by the following measure in the rotor blade end region (20), which comprises the rotor blade tip (8), in order to reduce the noise emission of the rotor blade (4): increasing a maximum camber of the profile of the rotor blade (4) in the rotor blade end region (20) starting from a relative blade length (r / R) of 0.92 and shifting, in the direction of the rotor blade trailing edge (18), a position at which the maximum camber of the profile of the rotor blade (4) is to be found.

2. The rotor blade (4) according to claim 1, **characterised in that** the rotor blade (4) has, in a central portion (36), trailing edge serrations (38) at the rotor blade trailing edge (18), wherein no trailing edge serrations (18) are present in the rotor blade end region (20), and wherein the central portion (36) extends, starting from the rotor blade end region (20), in the direction of the rotor blade root (6).

3. The rotor blade (4) according to claim 2, **characterised in that** the trailing edge serrations (38)
a) have a maximum length L1 of less than 20% of a length L2 of the chord of the profile (40) at the respective longitudinal position of the rotor blade (4)
and / or
b) have a material thickness d of 5 mm or less;
and / or
c) are inclined at an angle α of 5° or less with respect to a direction (42) of the chord of the profile (40).

4. The rotor blade (4) according to claim 2 or 3, **characterised in that**, in the central portion (36) of the rotor blade (4), a ratio of the thickness of the profile (PD) to the chord length L2 is less than 0.24.

5. The rotor blade (4) according to any one of the claims 2 to 4, **characterised in that** the central portion (36) extends, starting from a first profile plane (34), in the direction of the rotor blade tip (8), wherein, at the rated output power of the wind energy installation (2), the rotor blade (4) is exposed to a flow, in the first profile plane (34), at a relative speed of 55 m / s.

6. The rotor blade (4) according to any one of the claims 1 to 5, **characterised in that**, in a blade root region (22), the rotor blade (4) has vortex generators (24) on the suction side (14), wherein the blade root region (22) extends, starting from the rotor blade root, to a second profile plane (30), and wherein, at the rated output power of the wind energy installation (2) the rotor blade (4) is exposed to a flow, in the second profile plane (30), at a relative speed of 30 m / s.

7. The rotor blade (4) according to any one of the claims 1 to 6, **characterised in that** the rotor blade (4) has an erosion protection (44) on the rotor blade nose (16), wherein the erosion protection (44) is integrated into a surface of the rotor blade (4) with a step height of less than 0.2 mm.

8. The rotor blade (4) according to any one of the claims 1 to 7, **characterised in that** the rotor blade (4) has a tangential blow-out slot (46) on the suction side, wherein the blow-out slot (46) extends, starting from a third profile plane (48), in the direction of the rotor blade tip (8) and the third profile plane (48) is arranged at a relative blade length of at least approximately 80%.

9. A wind energy installation (2) with a rotor blade (4) according to any one of the claims 1 to 8.

10. A method of manufacturing a rotor blade (4) of a wind energy installation (2), wherein the rotor blade (4) has a suction side (14), a pressure side (26), a rotor blade nose (16) and a rotor blade trailing edge (18), which extend between a rotor blade root (6) and a rotor blade tip (8) and define a profile of the rotor blade (4), wherein the method is **characterised by** the following steps:
I) providing a power-optimised profile (50) of the rotor blade (4), wherein the power-optimised profile is aerodynamically optimised with regard to a power yield of the rotor blade,
II) modifying the power-optimised profile (50) in order to obtain a noise-optimised profile (52) in a rotor blade end region (20) in order to reduce a noise emission of the rotor blade (4), wherein the following measure is carried out, starting from the power-optimised profile in the rotor blade end region (20), which comprises the rotor blade tip (8): increasing a maximum camber of the profile of the rotor blade (4) in the rotor blade end region (20) starting from a relative blade length (r / R) of 0.92 and shifting, in the direction of the rotor blade trailing edge (18), a position at which the maximum camber of the profile is to be found, and
III) manufacturing the rotor blade (4) with the noise-optimised profile in the rotor blade end region (20).

11. The method according to claim 10, **characterised in that**, in a central portion (36), the rotor blade (4) is provided with trailing edge serrations (38) at the rotor blade trailing edge (18), wherein no trailing edge serrations (18) are provided in the rotor blade end region (20), and wherein the central portion (36) extends, starting from the rotor blade end region (20), in the direction of the rotor blade root (6).

12. The method according to claim 11, **characterised in that** the trailing edge serrations (38) are provided which
a) have a maximum length L1 of less than 20% of a length L2 of the chord of the profile (40) at the respective longitudinal position of the rotor blade (4)
and / or
b) have a material thickness d of 5 mm or less;
and / or
c) are inclined at an angle a of 5° or less with respect to a direction (42) of the chord of the profile (40).

13. The method according to claim 11 or 12, **characterised in that** a central section (36) is provided which, starting from a first profile plane (34), extends in the direction of the rotor blade tip (8), wherein, at the rated output power of the wind energy installation, the rotor blade (4) is exposed to a flow, in the first profile plane (34), at a relative speed of 55 m / s.

14. The method according to any one of the claims 10 to 13, **characterised in that**, in a blade root region (22), the rotor blade is provided with vortex generators (24) on the suction side (14), wherein the blade root region (22) extends, starting from the rotor blade root (6), to a second profile plane (30), and wherein, at the rated output power of the wind energy installation (2) the rotor blade (4) is exposed to a flow, in the second profile plane (30), at a relative speed of 30 m / s.

15. The method according to any one of the claims 10 to 14, **characterised in that** the rotor blade (4) is provided with a tangential blow-out slot (46) on the suction side (14), wherein the blow-out slot (46) extends, starting from a third profile plane (48), in the direction of the rotor blade tip (8) and the third profile plane (48) is arranged at a relative blade length of at least approximately 80%.

## Revendications

1. Pale de rotor (4) d'une éolienne (2), dans laquelle la pale de rotor (4) présente un côté aspiration (14), un côté pression (26), un nez de pale de rotor (16) et une arête arrière de pale de rotor (18), lesquels s'étendent entre une racine de pale de rotor (6) et une pointe de pale de rotor (8) et définissent un profil de la pale de rotor (4), **caractérisée en ce que** la pale de rotor (4) présente dans une zone d'extrémité de pale de rotor (20) un profil optimisé contre le bruit (52), lequel est modifié à partir d'un profil optimisé en puissance supposé (50), lequel est optimisé aérodynamiquement en ce qui concerne un rendement de puissance de la pale de rotor (4), pour la réduction de l'émission de bruit de la pale de rotor (4) dans la zone d'extrémité de pale de rotor (20), qui comprend la pointe de pale de rotor (8), par la mesure suivante : augmentation d'une courbure maximum du profil de la pale de rotor (4) dans la zone d'extrémité de pale de rotor (20) à partir d'une longueur de pale relative (r/R) de 0,92 et décalage d'une position, à laquelle la courbure maximum du profil de la pale de rotor (4) est présente, en direction de l'arête arrière de pale de rotor (18).

2. Pale de rotor (4) selon la revendication 1, **caractérisée en ce que** la pale de rotor (4) présente dans une section médiane (36) des dentelures d'arête arrière (38) (serrations) au niveau de l'arête arrière de pale de rotor (18), dans laquelle aucune dentelure d'arête arrière (18) n'est présente dans la zone d'extrémité de pale de rotor (20), et dans laquelle la section médiane (36) s'étend à partir de la zone d'extrémité de pale de rotor (20) en direction de la racine de pale de rotor (6).

3. Pale de rotor (4) selon la revendication 2, **caractérisée en ce que** les dentelures d'arête arrière (38)
a) présentent une longueur maximum L1 inférieure à 20 % d'une longueur L2 de la corde de profil (40) au niveau de la position longitudinale associée de la pale de rotor (4),
et/ou
b) présentent une épaisseur de matériau d de 5 mm ou moins,
et/ou
c) sont inclinées par rapport à une direction (42) de la corde de profil (40) d'un angle α de 5° ou moins.

4. Pale de rotor (4) selon la revendication 2 ou 3, **caractérisée en ce que** dans la section médiane (36) de la pale de rotor (4), un rapport de l'épaisseur de profil (PD) par rapport à la longueur de corde L2 est inférieur à 0,24.

5. Pale de rotor (4) selon l'une quelconque des revendications 2 à 4, **caractérisée en ce que** la section médiane (36) s'étend à partir d'un premier plan de profil (34) en direction de la pointe de pale de rotor (8), dans laquelle en cas de puissance nominale de l'éolienne (2), la pale de rotor (4) dans le premier plan de profil (34) est inondée avec une vitesse relative de 55 m/s.

6. Pale de rotor (4) selon l'une quelconque des revendications 1 à 5, **caractérisée en ce que** la pale de rotor (4) présente des générateurs de tourbillons (24) dans une zone de racine de pale (22) sur le côté aspiration (14), dans laquelle la zone de racine de pale (22) s'étend à partir de la racine de pale de rotor jusqu'à un deuxième plan de profil (30), et dans laquelle en cas de puissance nominale de l'éolienne (2), la pale de rotor (4) dans le deuxième plan de profil (30) est inondée avec une vitesse relative de 30 m/s.

7. Pale de rotor (4) selon l'une quelconque des revendications 1 à 6, **caractérisée en ce que** la pale de rotor (4) présente au niveau du nez de pale de rotor (16) une protection contre l'érosion (44), dans laquelle la protection contre l'érosion (44) est intégrée avec une hauteur de gradin de moins de 0,2 mm dans une surface de la pale de rotor (4).

8. Pale de rotor (4) selon l'une quelconque des revendications 1 à 7, **caractérisée en ce que** la pale de rotor (4) présente sur le côté aspiration une fente de soufflage tangentielle (46), dans laquelle la fente de soufflage (46) s'étend à partir d'un troisième plan de profil (48) en direction de la pointe de pale de rotor (8) et le troisième plan de profil (48) est agencé au niveau d'une longueur de pale relative d'au moins approximativement 80 %.

9. Éolienne (2) avec une pale de rotor (4) selon l'une quelconque des revendications 1 à 8.

10. Procédé de fabrication d'une pale de rotor (4) d'une éolienne (2), dans lequel la pale de rotor (4) présente un côté aspiration (14), un côté pression (26), un nez de pale de rotor (16) et une arête arrière de pale de rotor (18), lesquels s'étendent entre une racine de pale de rotor (6) et une pointe de pale de rotor (8) et définissent un profil de la pale de rotor (4), **caractérisé par** les étapes suivantes :
I) mise à disposition d'un profil optimisé en puissance (50) de la pale de rotor (4), dans lequel le profil optimisé en puissance est optimisé aérodynamiquement en ce qui concerne un rendement de puissance de la pale de rotor,
II) modification du profil optimisé en puissance (50), afin d'obtenir dans une zone d'extrémité de pale de rotor (20) un profil optimisé contre le bruit (52) pour la réduction d'une émission de bruit de la pale de rotor (4), dans lequel la mesure suivante est réalisée à partir du profil optimisé en puissance dans la zone d'extrémité de pale de rotor (20), qui comprend la pointe de pale de rotor (8) : augmentation d'une courbure maximum du profil de la pale de rotor (4) dans la zone d'extrémité de pale de rotor (20) à partir d'une longueur de pale relative (r/R) de 0,92 et décalage d'une position, à laquelle la courbure maximum du profil est présente, en direction de l'arête arrière de pale de rotor (18),
III) fabrication de la pale de rotor (4) avec le profil optimisé contre le bruit dans la zone d'extrémité de pale de rotor (20).

11. Procédé selon la revendication 10, **caractérisé en ce que** la pale de rotor (4) est dotée dans une section médiane (36) de dentelures d'arête arrière (38) (serrations) au niveau de l'arête arrière de pale de rotor (18), dans lequel aucune dentelure d'arête arrière (18) n'est prévue dans la zone d'extrémité de pale de rotor (20), et dans lequel la section médiane (36) s'étend à partir de la zone d'extrémité de pale de rotor (20) en direction de la racine de pale de rotor (6).

12. Procédé selon la revendication 11, **caractérisé en ce que** les dentelures d'arête arrière (38) sont prévues, qui
a) présentent une longueur maximum L1 inférieure à 20 % d'une longueur L2 de la corde de profil (40) au niveau de la position longitudinale associée de la pale de rotor (4),
et/ou
b) présentent une épaisseur de matériau d de 5 mm ou moins,
et/ou
c) sont inclinées par rapport à une direction (42) de la corde de profil (40) d'un angle α de 5° ou moins.

13. Procédé selon la revendication 11 ou 12, **caractérisé en ce qu'**une section médiane (36) est prévue, qui s'étend à partir d'un premier plan de profil (34) en direction de la pointe de pale de rotor (8), dans lequel en cas de puissance nominale de l'éolienne, la pale de rotor (4) dans le premier plan de profil (34) est inondée avec une vitesse relative de 55 m/s.

14. Procédé selon l'une quelconque des revendications 10 à 13, **caractérisé en ce que** la pale de rotor est dotée dans une zone de racine de pale (22) sur le côté aspiration (14) de générateurs de tourbillons (24), dans lequel la zone de racine de pale (22) s'étend à partir de la racine de pale de rotor (6) jusqu'à un deuxième plan de profil (30), et dans lequel en cas de puissance nominale de l'éolienne (2), la pale de rotor (4) dans le deuxième plan de profil (30) est inondée avec une vitesse relative de 30 m/s.

15. Procédé selon l'une quelconque des revendications 10 à 14, **caractérisée en ce que** la pale de rotor (4) est dotée sur le côté aspiration (14) d'une fente de soufflage tangentielle (46), dans lequel la fente de soufflage (46) s'étend à partir d'un troisième plan de profil (48) en direction de la pointe de pale de rotor (8) et le troisième plan de profil (48) est agencé au niveau d'une longueur de pale relative d'au moins approximativement 80 %.
